# EUROPEAN PATENT APPLICATION

(11) **EP 4 064 576 A1**
(43) Date of publication of application: **28.09.2022**
(21) Application number: 19953438.9
(22) Date of filing: 17.12.2019
(51) Int. Cl.: H04B 1/401

(54) **RADIO FREQUENCY CIRCUIT, TERMINAL DEVICE, AND SIGNAL TRANSMITTING METHOD**

(30) Priority: 18.11.2019 CN 201911127913
(71) Applicant: JRD Communication (Shenzhen) Ltd, Shenzhen, Guangdong 518052 (CN)
(72) Inventor: HUANG, Fan, Shenzhen, Guangdong 518052 (CN)
(74) Representative: V.O.
(86) International application number: PCT/CN2019/126099
(87) International publication number: WO 2021/097978

(57) **Abstract**

Provided is a radio frequency circuit. The radio frequency circuit comprises: a radio frequency module, a first combiner, a second combiner, a main antenna, and an auxiliary antenna, wherein the main antenna is connected to the radio frequency module by means of the first combiner, and the auxiliary antenna is connected to the radio frequency module by means of the second combiner; and the radio frequency module sends a main antenna signal of at least one frequency band to the auxiliary antenna via the second combiner, and sends an auxiliary antenna signal of the corresponding frequency band to the main antenna via the first combiner.

## Description

### CROSS-REFERENCE TO RELATED APPLICATION

This application claims priority benefit to Chinese Patent Application No. 201911127913.9, filed on November 18, 2019, and entitled "RADIO FREQUENCY CIRCUIT, TERMINAL DEVICE, AND SIGNAL TRANSMITTING METHOD", the entire contents of which are hereby incorporated by reference in its entirety in this application.

### FIELD OF INVENTION

The present disclosure relates to wireless communication technology, and more specifically, to a radio frequency circuit, a terminal device, and a signal transmitting method.

### BACKGROUND

A conventional terminal product is usually provided with a main antenna and an auxiliary antenna. For a communication product such as a mobile phone, the main antenna is generally installed at a lower end, and the auxiliary antenna is installed at an upper end. Usually, the main antenna is responsible for receiving and transmitting main antenna signals, and the auxiliary antenna is configured to receive auxiliary antenna signals. However, a user will hold the lower end of the product when making a call, so that the main antenna signals may be greatly affected. Therefore, in the prior art, a multiple-input and multiple-output switch is installed in a hardware circuit so as to control signal transmission paths, thereby avoiding the influence of the transmitted/received signals by the user's hand. However, a certain power loss will be caused by the multiple-input and multiple-output switch, in addition, cost will also be increased.

### SUMMARY

There is provided a radio frequency circuit, a terminal device, and a signal transmitting method, which aims to avoid the influence of the transmitted/received signals by the user's hand and to reduce the signal attenuation and cost caused by the multiple-input and multiple-output switch.

In a first aspect of the present disclosure, there is provided a radio frequency circuit, comprising: a radio frequency module, a first combiner, a second combiner, a main antenna, and an auxiliary antenna, wherein the main antenna is connected to the radio frequency module via the first combiner, and the auxiliary antenna is connected to the radio frequency module via the second combiner; wherein the radio frequency module is configured to transmit the main antenna signals within at least one radio frequency band to the auxiliary antenna via the second combiner, and to transmit the auxiliary antenna signals within at the corresponding frequency band to the main antenna via the first combiner.

Optionally, in some embodiments of the present disclosure, the type of the first combiner and/or the second combiner comprises a dual-frequency combiner, a triple-frequency combiner, or a quad-frequency combiner.

Optionally, in some embodiments of the present disclosure, each of the first combiner and the second combiner comprises at least two input ends and one output end; the output end of the first combiner is connected to the main antenna, and the at least two input ends of the first combiner are connected to the radio frequency module; the output end of the second combiner is connected to the auxiliary antenna, and the at least two input ends of the second combiner are connected to the radio frequency module.

Optionally, in some embodiments of the present disclosure, the radio frequency module combines a radio frequency transceiver for receiving and transmitting radio frequency signals.

Optionally, in some embodiments of the present disclosure, the radio frequency module further combines a power amplifier for amplifying the radio frequency signal transmitted by the radio frequency transceiver.

Optionally, in some embodiments of the present disclosure, the radio frequency module further combiners a front-end module, and the front-end module comprises a switch and a radio frequency filter, wherein the switch is configured to switch between receiving the radio frequency signals and transmitting the radio frequency signals, and the radio frequency filter is configured to filer the radio frequency signals.

In a second aspect of the present disclosure, there is provided a terminal device, comprising a radio frequency circuit, wherein the radio frequency circuit comprises: a radio frequency module, a first combiner, a second combiner, a main antenna, and an auxiliary antenna, wherein the main antenna is connected to the radio frequency module via the first combiner, and the auxiliary antenna is connected to the radio frequency module via the second combiner; wherein the radio frequency module is configured to transmit the main antenna signals within at least one radio frequency band to the auxiliary antenna via the second combiner, and to transmit the auxiliary antenna signals with a corresponding band to the main antenna via the first combiner.

Optionally, in some embodiments of the present disclosure, the type of the first combiner and/or the second combiner comprises a dual-frequency combiner, a triple-frequency combiner, or a quad-frequency combiner.

Optionally, in some embodiments of the present disclosure, each of the first combiner and the second combiner comprise at least two input ends and one output end; the output end of the first combiner is connected to the main antenna, and the at least two input ends of the first combiner is connected to the radio frequency module; the output end of the second combiner is connected to the auxiliary antenna, and the at least two input ends of the second combiner is connected to the radio frequency module.

Optionally, in some embodiments of the present disclosure, the terminal further comprises a sensor for detecting the holding state of the terminal.

Optionally, in some embodiments of the present disclosure, the sensor further comprises a pressure sensor, and the hold state is determined as a held state when the pressure value of the pressure sensor is greater than a preset value.

Optionally, in some embodiments of the present disclosure, the main antenna is installed at the lower end of the terminal device, and the auxiliary antenna is installed at upper end of the terminal device, and the sensor is installed at the lower end of the terminal.

Optionally, in some embodiments of the present disclosure, the radio frequency module combines a radio frequency transceiver for receiving and transmitting radio frequency signals.

Optionally, in some embodiments of the present disclosure, the radio frequency module further combines a power amplifier for amplifying the radio frequency signal transmitted by the radio frequency transceiver.

Optionally, in some embodiments of the present disclosure, the radio frequency module further combiners a front-end module, and the front-end module comprises a switch and a radio frequency filter, wherein the switch is configured to switch between receiving the radio frequency signals and transmitting the radio frequency signals, and the radio frequency filter is configured to filer the radio frequency signals.

In a third aspect of the present disclosure, there is provided a signal transmitting method, which is applied to a radio frequency circuit, wherein the radio frequency circuit comprises: a radio frequency module, a first combiner, a second combiner, a main antenna, and an auxiliary antenna, wherein the main antenna is connected to the radio frequency circuit via the first combiner, and the auxiliary antenna is connected to the radio frequency circuit via the second combiner; wherein the method comprising:
detecting whether the main antenna is held by the user's hand;
if so, determining the target frequency band from at least one signal frequency band currently to be transmitted;
sending the main antenna signals within the target frequency band to the auxiliary antenna via the second combiner, and sending the auxiliary antenna signals within the target frequency band to the main antenna via the first combiner;
if not, sending all the main antenna signals within the frequency band to be transmitted to the main antenna via the first combiner and sending all the auxiliary antenna signals within the frequency band to be transmitted to the auxiliary antenna via the second combiner.

Optionally, in some embodiments of the present disclosure, the step of detecting whether the main antenna is held by the user's hand, further comprises:
detecting whether the signal strength of the main antenna is changed;
if so, and the signal strength is changed from strong to weak, it is determined that the main antenna is held by the user's hand;
if not, it is determined that the main antenna is not held by the user's hand.

Optionally, in some embodiments of the present disclosure, the radio frequency circuit further comprises a sensor, the sensor is configured to detect the pressure value received by the main antenna, and the step of detecting whether the main antenna is held by the user's hand, further comprises:
determining that the main antenna is held by the user's hand when the pressure value is greater than a preset value;
determining that the main antenna is not held by the user's hand when the pressure value is not greater than the preset value.

Optionally, in some embodiments of the present disclosure, the step of determining the target frequency band from at least one signal frequency band currently to be transmitted, further comprises:
determining the signal strength of the main antenna signals within the at least one signal frequency band currently to be transmitted;
sorting the at least one signal frequency band to be transmitted according to the order of the signal strength from weak to strong;
defining the signal frequency band to be transmitted at the first preset position in the sorting order as the target frequency band.

Optionally, in some embodiments of the present disclosure, when the signal frequency band to be transmitted are multiple, after the step of sending the main antenna signals within the target frequency band to the auxiliary antenna via the second combiner, and sending the auxiliary antenna signals within the target frequency band to the main antenna via the first combiner, further comprises:
sending the main antenna signals within the remaining of the at least one signal frequency band to be transmitted to the main antenna via the first combiner and sending the auxiliary antenna signals within the remaining of the at least one signal frequency band to be transmitted to the auxiliary antenna via the second combiner.

### ADVANTAGES OF THE PRESENT DISCLOSURE

In the present disclosure, there is provided the radio frequency circuit, terminal device, and signal transmitting method. The radio frequency circuit comprises: a radio frequency module, a first combiner, a second combiner, a main antenna, and an auxiliary antenna, wherein the main antenna is connected to the radio frequency circuit via the first combiner, and the auxiliary antenna is connected to the radio frequency circuit via the second combiner; wherein the radio frequency module is configured to transmit the main antenna signals within at least one radio frequency band to the auxiliary antenna via the second combiner, and to transmit the auxiliary antenna signals within at the corresponding bond to the main antenna via the first combiner, so that the main antenna signals are directly transmitted from the auxiliary antenna, without the control of the multiple-input and multiple-out switch, which may avoid influence of the transmitted/received signals by the user's hand and reduce signal attenuation and cost caused by the multiple-input and multiple-output switch.

### BRIEF DESCRIPTION OF THE DRAWINGS

To clarify embodiments of the present disclosure or technical schemes in the prior arts, appended drawings required in the descriptions of the embodiments and the prior arts are briefly described as follows. It should be apparent that the following drawings merely illustrate some embodiments of the present disclosure. For those skilled in the art, other drawings may be acquired according to the drawings without devoting effort.
FIG. 1 is a schematic structural diagram of a conventional radio frequency circuit according to an embodiment of the present disclosure.
FIG. 2 is a schematic structural diagram of a radio frequency circuit provided by an embodiment of the present disclosure.
FIG. 3 is a schematic structural diagram of a terminal provided by an embodiment of the present disclosure.
FIG. 4 is a schematic flowchart of a signal transmitting method provided by an embodiment of the present disclosure.

### DESCRIPTION OF PREFERRED EMBODIMENTS

Each of the following embodiments is described with appending figures to illustrate specific embodiments of the present disclosure that are applicable. The terminologies of direction mentioned in the present disclosure, such as "upper", "lower", "front", "rear", "left", "right", "inner", "outer", "side surface", etc., only refer to the directions of the appended figures. Therefore, the terminologies of direction are used for explanation and comprehension of the present disclosure, instead of limiting the present disclosure. In the figures, units with similar structures are marked with the same or similar reference characters.

It should be noted that the thicknesses and shapes in the drawings of the present disclosure do not reflect the real scale and are merely intended to illustrate the contents of the embodiments of the present disclosure.

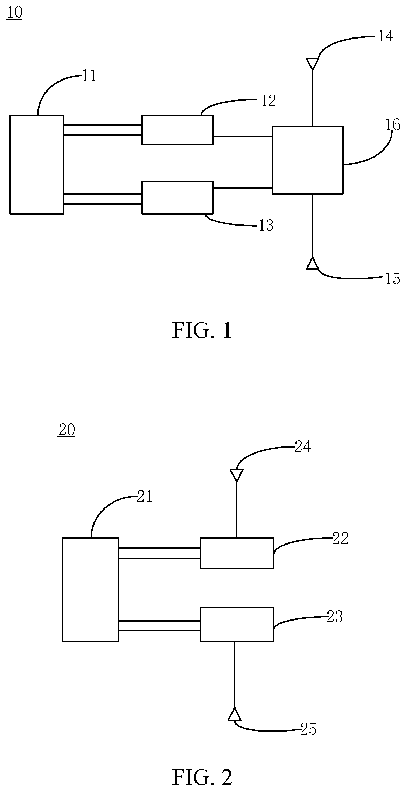

Please refer to FIG. 1. FIG. 1 is a schematic structural diagram of a conventional radio frequency circuit according to an embodiment of the present disclosure. As shown in FIG. 1, the conventional radio frequency circuit 10 comprises a radio frequency module 11, a first combiner 12, a second combiner 13, a main antenna 14, an auxiliary antenna 15, and a multiple-input and multiple-output switch 16. An existing product is usually provided with a main antenna 14 and an auxiliary antenna 15. For a communication product such as a mobile phone, the main antenna 14 is generally provided at a lower end thereof, and the auxiliary antenna 15 is provided at an upper end thereof. Usually, the main antenna 14 is configured to receive and transmit main antenna signals, while the auxiliary antenna 15 only receives auxiliary antenna signals. However, a user will hold the lower end of the product when making a call when making a call, so that the main antenna signals may be greatly affected. Therefore, in the prior art, a multiple-input and multiple-output switch 16 is installed in a hardware circuit so as to control the signal transmission paths, thereby avoiding influence of the transmitted/received signals by the user's hand. However, a certain power loss will be caused by the multiple-input and multiple-output switch, in addition, cost will also be increased. In order to solve the foregoing problems, there is a radio frequency circuit provided in the present disclosure, so that the main antenna signals are directly transmitted from the auxiliary antenna without a control of the multiple-input and multiple-out switch, which may reduce signal attenuation and cost caused by the multiple-input and multiple-output switch and avoid influence of the transmitted/received signals by the user's hand.

Please refer to FIG. 2. FIG. 2 is a schematic structural diagram of a radio frequency circuit provided by an embodiment of the present disclosure. As shown in FIG. 2, the radio frequency circuit 20 comprises a radio frequency module 21, a first combiner 22, a second combiner 23, a main antenna 24, and an auxiliary antenna 25, and the main antenna 24 is connected to the radio frequency module 21 via the first combiner 22, and the auxiliary antenna 25 is connected to the radio frequency module 21 via the second combiner 23, wherein the radio frequency module 21 is configured to transmit the main antenna signals within at least one radio frequency band to the auxiliary antenna via the second combiner, and to transmit the auxiliary antenna signals within at the corresponding frequency band to the main antenna via the first combiner.

Wherein the radio frequency module comprises a radio frequency transceiver (not shown in the figure).

The radio frequency transceiver is a core processing unit of radio frequency from a mobile phone. The radio frequency transceiver mainly includes a receiving unit and a transmitting unit. The former is configured to amplify, filter and down-convert a received signal, and finally output a baseband signal. Usually, zero intermediate frequency and digital low intermediate frequency are adopted by the former to perform RF to baseband conversion. The latter is configured to up-convert, filter, and amplify the baseband signal so that the conversion of the baseband signal to the radio frequency signal is performed by using a secondary frequency regulation. Furthermore, when the radio frequency/intermediate frequency (RF/IF) integrated circuit (IC) receives a signal, the receiving unit receives the signal from the antenna (about 800Hz~3GHz), and then amplifies, filters, and implements synthesis processing the signal so as to down-convert RF signal to baseband signal, followed by the baseband signal processing. When the RF/IF IC is required to transmit a signal, the transmitting unit is used to up-convert the baseband below 20KHz and convert baseband signal into RF signal within a radio frequency band, so as to send it out.

The radio frequency module 21 further includes a power amplifier (not shown in the figure).

The power amplifier (PA) is configured to amplify the RF signal output by the transceiver. A field of power amplifiers is an independent technical field with threshold conditions. The PA is a component that cannot be integrated in a mobile phone, and it is also the most important component in the mobile phone since performance, occupied space, call quality, cell phone strength, and battery life are all determined by the PA.

The radio frequency module 21 further includes a front-end module (not shown in the figure).

The front-end module is integrated with a switch and an RF filter so as to switch between receiving antennas and transmitting antennas, select a radio frequency band, and filter the received RF signals and transmitted RF signals. In the sub-2GHz frequency band, a majority of RF front-end modules are designed with a silicon integrated circuit such as complementary metal oxide semiconductor (CMOS), bipolar junction transistor (BJT), silicon germanium (SiGe) or bipolar complementary metal oxide semiconductor (Bipolar CMOS), which is becoming more and more prevalent. Since the process of the silicon integrated circuit is more mature, it is sufficient to design a vast and complex circuit in addition to an intermediate frequency and fundamental frequency circuit, so that the silicon integrated circuit has great potential for development, and other heterostructure transistors are also emerging in special-purpose circuits. However, the performance of the silicon integrated circuit in terms of low noise characteristics, high power output, and power increase efficiency in the frequency band above 5GHz is far inferior to that of gallium arsenide field-effect transistor (GaAs-FET). At this stage, the process of the GaAs-FET still dominates in the performance of electrical functions. RF front-end module circuit design used to focus on the design of power amplifiers and aim at low-voltage operation, high power output, and high power to increase efficiency, in order to meet the use of low-voltage battery, thereby reducing size and saving power. As high power and linearity are usually not balanced, it is an inevitable research focus upon maintaining good linearity with extensive use of digital modulation technology.

In this embodiment, the type of the first combiner 22 and the second combiner 23 include a dual-frequency combiner, a three-frequency combiner, or a four-frequency combiner.

In the wireless mobile phone communication system, the main function of the combiner is configured to combine the input multi-band signals together and output them to a same indoor distribution system.

For example, in the radio antenna system, the input/output signals within several different frequency bands (such as 145MHZ and 435MHZ) are combined by the combiner, and a feeder is to be connected with a radio, which not only saves the feeder, but also avoids the trouble of switching between different antennas.

Types of dual-frequency combiners are as follows:
(1) Global system for mobile communications and 3G (GSM&3G) dual-band combiner is a device with two input ports and one output port, which is for combining GSM signals (885-960MHz) with 3G (third-generation mobile communication technology) signals (1920-2170MHz).
(2) Distributed control system and 3G (DCS&3G) dual frequency combiner is a device with two input ports and one output port, which is for combing DCS signals (1710-1880MHz) with 3G signals (1920-2170MHz).
(3) Trans-European Trunked Radio/Integrated Digital Enhanced Network/code division multiple access/Global System for Mobile Communications (TETRA/iDEN/CDMA/GSM) and Distributed control system/Personal Handy-phone system/3G/wireless local area network (DCS/PHS/3G/WLAN) dual-band combiner is a device with two input ports and one output port. One input port covers frequency range (800- 960MHz) of TETRA/iDEN, CDMA and GSM system, imported from TETRA/iDEN, CDMA, GSM or any combination of signals; another input port covers frequency range (1710-2500MHz) of DCS, PHS, 3G and WLAN system, imported from DCS, PHS, 3G, WLAN or any combination of signals.

Types of triple-frequency combiners are as follows:
(1) GSM&DCS&3G triple-frequency combiner is a device with three input ports and one output port, which is for combining GSM (885-960MHz), DCS (1710-1880MHz) and 3G (1920-2170MHz) signals.
(2) GSM&3G&WLAN triple-frequency combiner is a device with three input ports and one output, which is for combing GSM (885-960MHz), 3G (1920-2170MHz), and WLAN (2400-2500MHz) signals.

Type of quad-frequency combiner is as follows:
GSM&DCS&3G&WLAN quad-frequency combiner is a device with four input ports and one output, which is for combing GSM (885-960MHz), DCS (1710-1880MHz), 3G (1920-2170MHz) and WLAN (2400-2483.5MHz) signals.

In this embodiment, each of the first combiner 22 and the second combiner 23 includes at least two input ends and one output end. The output end of the first combiner 22 is connected to the main antenna 24, and the at least two input ends of the first combiner 22 are connected to the radio frequency module 21. The output end of the second combiner 23 is connected to the auxiliary antenna 25, and the at least two input ends of the second combiner 23 are connected to the radio frequency module 21.

In this embodiment, the first combiner 22 and the second combiner 23 are of a same type. For example, when two signals within frequency bands are to be transmitted, each of the first combiner 22 and the second combiner 23 is a dual-frequency combiner. This combination mode not only enables the dual-frequency signals to be combined, but also does not cause a waste of resources.

Different from the prior art, the radio frequency circuit provided by this disclosure includes a radio frequency module, a first combiner, a second combiner, a main antenna, and an auxiliary antenna, wherein the main antenna is connected to the radio frequency module via the first combiner, and the auxiliary antenna is connected to the radio frequency module via the second combiner; wherein the radio frequency module is configured to transmit the main antenna signals within at least one radio frequency band to the auxiliary antenna via the second combiner, and to transmit the auxiliary antenna signals with a corresponding band to the main antenna via the first combiner, so that the main antenna signals are directly transmitted from the auxiliary antenna, without the control of the multiple-input and multiple-out switch, which may avoid influence of the transmitted/received signals by the user's hand and reduce signal attenuation and cost caused by the multiple-input and multiple-output switch.

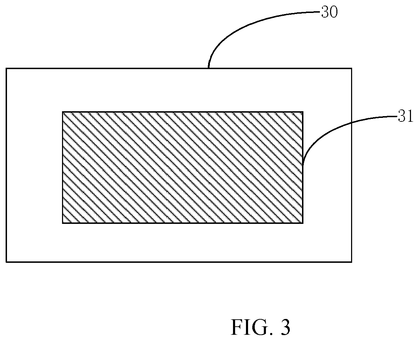

Please refer to FIG. 3. FIG. 3 is a schematic structural diagram of a terminal provided by an embodiment of the present disclosure. An embodiment of the present disclosure further provides a terminal device, and the terminal device 30 includes any one of the above-mentioned radio frequency circuits 31.

In this embodiment, the terminal 30 further includes a sensor (not shown in the figure) for detecting the holding state of the terminal 30.

The sensor is a detection device that may sense measured information and may transform sensed information into electrical signals or other required forms of information output according to specific rules, so as to meet requirements of information transmission, information processing, information storage, information display, information recording and information control, and so on. Characteristics of the sensor include miniaturization, digitization, intelligence, multi-function, systematization, and networking, and it is a principal element for implementing automatic detection and automatic control.

In this embodiment, the above-mentioned sensor includes a pressure sensor, and when a pressure value of the pressure sensor is greater than a preset value, a holding state of the terminal 30 is determined as a held state.

The pressure sensor is an apparatus or a device that may sense a pressure signal and convert the pressure signal into a usable output electrical signal according to specific rules.

In this embodiment, the main antenna (not shown in the figure) is installed at the lower end of the terminal 30, the auxiliary antenna (not shown in the figure) is installed at the upper end of the terminal 30, and the above-mentioned sensors are installed at the lower end of the terminal 30. Namely, the lower end of the terminal 30 is also the position of the main antenna. By installing the sensor at the lower end of the terminal 30, the monitored holding state of the terminal 30 represents the holding state of the main antenna.

It should be noted that the main antenna is currently installed on the upper end of the mobile phones, especially high-end mobile phones, by some manufacturers, which may avoid the influence of the main antenna signals from the main antenna as the lower portion of the mobile is held by the user's hand.

Different from the prior art, the terminal in this embodiment includes the radio frequency circuit provided in the present disclosure, and the radio frequency circuit includes a radio frequency module, a first combiner, a second combiner, a main antenna, and an auxiliary antenna, wherein the main antenna is connected to the radio frequency module via the first combiner, and the auxiliary antenna is connected to the radio frequency module via the second combiner; wherein the radio frequency module is configured to transmit the main antenna signals within at least one radio frequency band to the auxiliary antenna via the second combiner, and to transmit the auxiliary antenna signals with a corresponding band to the main antenna via the first combiner, so that the main antenna signals are directly transmitted from the auxiliary antenna, without the control of the multiple-input and multiple-out switch, which may avoid influence of the transmitted/received signals by the user's hand and reduce signal attenuation and cost caused by the multiple-input and multiple-output switch.

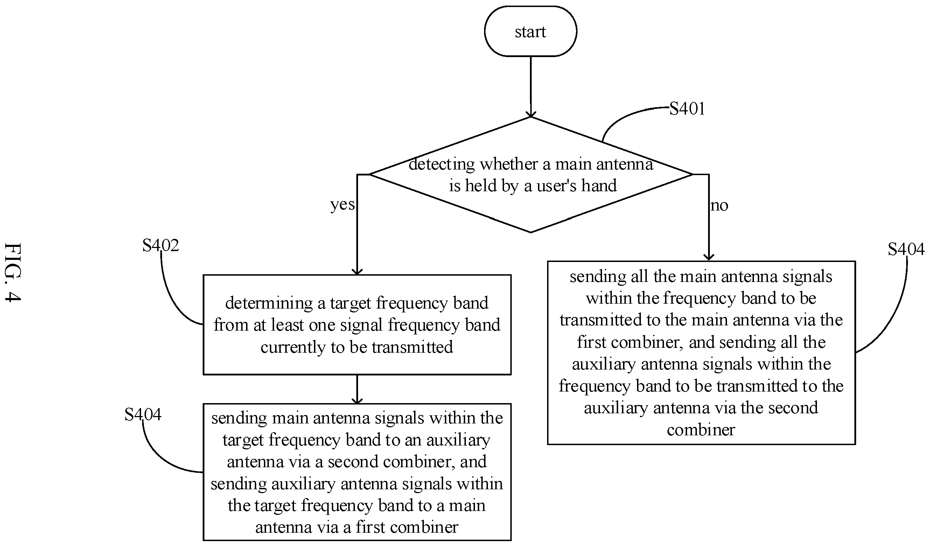

In addition, an embodiment of the present disclosure also provides a signal transmitting method, which is applied to a radio frequency circuit, wherein the radio frequency circuit comprises a radio frequency module, a first combiner, a second combiner, a main antenna, and an auxiliary antenna, wherein the main antenna is connected to the radio frequency circuit via the first combiner, and the auxiliary antenna is connected to the radio frequency circuit via the second combiner. As shown in FIG. 4, FIG. 4 is a schematic flowchart of a signal transmitting method provided by an embodiment of the present disclosure. The method includes:

S401: detecting whether the main antenna is held by a user's hand; if so, execute following step S402, if not, execute following step S403.

As the main antenna is held by the user's hand, the signal of the main antenna will be rapidly weakened or even interrupted. Therefore, that whether the main antenna is held by the user's hand may be judged by detecting signal strength. In addition, it is also possible to detect by a sensor whether the main antenna is held by the user's hand. The sensor is a detection device that may sense the measured information and may transform the sensed information into electrical signals or other required forms of information output according to specific rules, so as to meet requirements of information transmission, information processing, information storage, information display, information recording, and information control, and so on. The characteristics of the sensor include miniaturization, digitization, intelligence, multi-function, systematization, and networking, and it is a principal element for implementing automatic detection and automatic control.

S402: determining a target frequency band from at least one signal frequency band currently to be transmitted.

Specifically, step S402 may include following steps of:
1-1: determining the signal strength of main antenna signals within the at least one signal frequency band currently to be transmitted;
1-2: sorting the at least one signal frequency band to be transmitted according to an order of the signal strength from weak to strong;
1-3: defining the signal frequency band to be transmitted at a first preset position in the sorting order as the target frequency band.

S403: sending the main antenna signals within the target frequency band to the auxiliary antenna via the second combiner and sending the auxiliary antenna signals within the target frequency band to the main antenna via the first combiner.

In this embodiment, when the signal frequency band to be transmitted are multiple, after step S403 further includes, sending the main antenna signals with a remaining of the at least one signal frequency band to be transmitted to the main antenna via the first combiner and sending the auxiliary antenna signals within the remaining of the at least one signal frequency band to be transmitted to the auxiliary antenna via the second combiner.

S404: sending all the main antenna signals within the frequency band to be transmitted to the main antenna via the first combiner and sending all the auxiliary antenna signals within the frequency band to be transmitted to the auxiliary antenna via the second combiner.

Different from the prior art, the signal transmitting method in this embodiment is applied to a radio frequency circuit, and the radio frequency circuit includes a radio frequency module, a first combiner, a second combiner, a main antenna, and an auxiliary antenna, wherein the main antenna is connected to the radio frequency circuit via the first combiner, and the auxiliary antenna is connected to the radio frequency circuit via the second combiner. The above signal transmitting method comprises: detecting whether the main antenna is held by the user's hand; if so, determining a target frequency band from at least one signal frequency band currently to be transmitted; sending the main antenna signals within the target frequency band to the auxiliary antenna via the second combiner, and sending the auxiliary antenna signals within the target frequency band to the main antenna via the first combiner; if not, sending all the main antenna signals within the frequency band to be transmitted to the main antenna via the first combiner, and sending all the auxiliary antenna signals within the frequency band to be transmitted to the auxiliary antenna via the second combiner. In this signal transmitting method, the frequency band that is greatly affected by the user's hand is determined as the target frequency band, and the main antenna signal within the target frequency band is directly transmitted to the auxiliary antenna, so that the main antenna signals affected by the user's hand are directly transmitted from the auxiliary antenna, without the control of the multiple-input and multiple-out switch, which may avoid influence of the transmitted/received signals by the user's hand and reduce signal attenuation and cost caused by the multiple-input and multiple-output switch.

The above are only the preferred embodiments of the present disclosure and are not intended to limit the present disclosure. Any modification, equivalent replacement and simple improvement made on the substantive content of the present disclosure all should be included in the protection scope of the present disclosure.

In summary, although the present disclosure has been disclosed in the above preferred embodiments, the above preferred embodiments do not intend to limit the present disclosure. Various modifications and changes may be made by ordinary person skilled in the art without departing from the spirit and scope of this disclosure. Therefore, the scope of protection of this application is subject to the scope defined by the claims. For modifications and variations to the present disclosure, reference may be made to the description in the foregoing embodiments and details are not described herein again.

In summary, although the present disclosure has been disclosed in the above preferred embodiments, the above preferred embodiments do not intend to limit the present disclosure. Various modifications and changes may be made by ordinary person skilled in the art without departing from the spirit and scope of this disclosure. Therefore, the scope of protection of this application is subject to the scope defined by the claims.

## Claims

1. A radio frequency circuit, **characterized in that** the radio frequency circuit comprises: a radio frequency module, a first combiner, a second combiner, a main antenna, and an auxiliary antenna, wherein the main antenna is connected to the radio frequency module via the first combiner, and the auxiliary antenna is connected to the radio frequency module via the second combiner; wherein the radio frequency module is configured to transmit the main antenna signals within at least one radio frequency band to the auxiliary antenna via the second combiner, and to transmit the auxiliary antenna signals within at the corresponding frequency band to the main antenna via the first combiner.

2. The radio frequency circuit of claim 1, **characterized in that** a type of the first combiner and/or the second combiner comprises a dual-frequency combiner, a triple-frequency combiner, or a quad-frequency combiner.

3. The radio frequency circuit of claim 1, **characterized in that** each of the first combiner and the second combiner comprises at least two input ends and one output end; the output end of the first combiner is connected to the main antenna, and the at least two input ends of the first combiner are connected to the radio frequency module; the output end of the second combiner is connected to the auxiliary antenna, and the at least two input ends of the second combiner are connected to the radio frequency module.

4. The radio frequency circuit of claim 1, **characterized in that** the radio frequency module comprises a radio frequency transceiver for receiving and transmitting radio frequency signals.

5. The radio frequency circuit of claim 4, **characterized in that** the radio frequency module further comprises a power amplifier for amplifying the radio frequency signal transmitted by the radio frequency transceiver.

6. The radio frequency circuit of claim 4, **characterized in that** the radio frequency module further comprises a front-end module, and the front-end module comprises a switch and a radio frequency filter, wherein the switch is configured to switch between receiving the radio frequency signals and transmitting the radio frequency signals, and the radio frequency filter is configured to filter the radio frequency signals.

7. A terminal device, comprising the radio frequency circuit of claim 1, **characterized in that** the radio frequency circuit comprises: a radio frequency module, a first combiner, a second combiner, a main antenna, and an auxiliary antenna, wherein the main antenna is connected to the radio frequency module via the first combiner, and the auxiliary antenna is connected to the radio frequency module via the second combiner; wherein the radio frequency module is configured to transmit the main antenna signals within at least one radio frequency band to the auxiliary antenna via the second combiner, and to transmit the auxiliary antenna signals within at the corresponding frequency band to the main antenna via the first combiner.

8. The terminal of claim 7, **characterized in that** a type of the first combiner and/or the second combiner comprises a dual-frequency combiner, a triple-frequency combiner, or a quad-frequency combiner.

9. The terminal of claim 7, **characterized in that** each of the first combiner and the second combiner comprise at least two input ends and one output end; the output end of the first combiner is connected to the main antenna, and the at least two input ends of the first combiner are connected to the radio frequency module; the output end of the second combiner is connected to the auxiliary antenna, and the at least two input ends of the second combiner are connected to the radio frequency module.

10. The terminal of claim 7, **characterized in that** the terminal further comprises a sensor for detecting the holding state of the terminal.

11. The terminal of claim 10, **characterized in that** the sensor further comprises a pressure sensor, and a hold state is determined as a held state as pressure value of the pressure sensor is greater than a preset value, and the hold state is determined as an unheld state as the pressure value of the pressure sensor is less than or equal to the preset value.

12. The terminal of claim 10, **characterized in that** the main antenna is installed at a lower end of the terminal device, and the auxiliary antenna is installed at an upper end of the terminal device, and the sensor is installed at the lower end of the terminal.

13. The terminal of claim 7, **characterized in that** the radio frequency module comprises a radio frequency transceiver for receiving and transmitting radio frequency signals.

14. The terminal of claim 13, **characterized in that** the radio frequency module further comprises a power amplifier for amplifying the radio frequency signal transmitted by the radio frequency transceiver.

15. The terminal of claim 13, **characterized in that** the radio frequency module further comprises a front-end module, and the front-end module comprises a switch and a radio frequency filter, wherein the switch is configured to switch between receiving the radio frequency signals and transmitting the radio frequency signals, and the radio frequency filter is configured to filter the radio frequency signals.

16. A signal transmitting method, applied to a radio frequency circuit, **characterized in that** the radio frequency circuit comprises a radio frequency module, a first combiner, a second combiner, a main antenna, and an auxiliary antenna, wherein the main antenna is connected to the radio frequency circuit via the first combiner, and the auxiliary antenna is connected to the radio frequency circuit via the second combiner, and the signal transmitting method comprises:
detecting whether the main antenna is held by a user's hand;
if so, determining the target frequency band from at least one signal frequency band currently to be transmitted;
sending main antenna signals within the target frequency band to the auxiliary antenna via the second combiner, and sending auxiliary antenna signals within the target frequency band to the main antenna via the first combiner;
if not, sending all the main antenna signals within the frequency band to be transmitted to the main antenna via the first combiner, and sending all the auxiliary antenna signals within the frequency band to be transmitted to the auxiliary antenna via the second combiner.

17. The signal transmitting method of claim 16, **characterized in that** the step of detecting whether the main antenna is held by the user's hand, further comprises:
detecting whether signal strength of the main antenna is changed;
if so, and the signal strength is changed from strong to weak, it is determined that the main antenna is held by the user's hand;
if not, it is determined that the main antenna is not held by the user's hand.

18. The signal transmitting method of claim 16, **characterized in that** the radio frequency circuit further comprises a sensor, the sensor is configured to detect a pressure value received by the main antenna, and the step of detecting whether the main antenna is held by the user's hand, further comprises:
determining that the main antenna is held by the user's hand when the pressure value is greater than a preset value;
determining that the main antenna is not held by the user's hand when the pressure value is not greater than the preset value.

19. The signal transmitting method of claim 16, **characterized in that** the step of determining the target frequency band from at least one signal frequency band currently to be transmitted, further comprises:
determining signal strength of the main antenna signals within the at least one signal frequency band currently to be transmitted;
sorting the at least one signal frequency band to be transmitted according to an order of the signal strength from weak to strong;
defining the signal frequency band to be transmitted at the first preset position in the sorting order as the target frequency band.

20. The signal transmitting method of claim 16, **characterized in that** when the signal frequency band to be transmitted are multiple, after the step of sending the main antenna signals within the target frequency band to the auxiliary antenna via the second combiner, and sending the auxiliary antenna signals within the target frequency band to the main antenna via the first combiner, further comprises:
sending the main antenna signals within a remaining of the at least one signal frequency band to be transmitted to the main antenna via the first combiner and sending the auxiliary antenna signals within the remaining of the at least one signal frequency band to be transmitted to the auxiliary antenna via the second combiner.
